**Europäisches Patentamt**

**European Patent Office**

**Office européen des brevets**

(19)

(11) Veröffentlichungsnummer : **0 075 645 B1**

(12) **EUROPÄISCHE PATENTSCHRIFT**

(45) Veröffentlichungstag der Patentschrift : **30.12.86**

(51) Int. Cl.⁴ : **B 65 G 67/60**, B 65 G 21/18

(21) Anmeldenummer : **82103497.2**

(22) Anmeldetag : **24.04.82**

(54) **Gutübergabeeinrichtung zum Be- und Entladen von Grossraumtransportmitteln.**

(30) Priorität : **01.07.81 DE 3125880**

(43) Veröffentlichungstag der Anmeldung :
**06.04.83 Patentblatt 83/14**

(45) Bekanntmachung des Hinweises auf die Patenterteilung : **30.12.86 Patentblatt 86/52**

(84) Benannte Vertragsstaaten :
**AT BE CH FR GB IT LI NL SE**

(56) Entgegenhaltungen :
**DE-A- 2 824 427
DE-A- 2 833 449
DE-B- 1 290 875
DE-U- 8 119 173
US-A- 3 297 141
US-A- 4 269 302**

(73) Patentinhaber : **BAAS Technik GmbH
Industriestrasse 39 - 43
D-2000 Wedel (DE)**

(72) Erfinder : **Toaspern, Jörg, Ing. grad.
Buchsbaumweg 10
D- 2000 Hamburg - Schenefeld (DE)**
Erfinder : **Grosshauser, Anton, Ing. grad.
Nachtigallenstieg 2a
D-2000 Hamburg-Schenefeld (DE)**

(74) Vertreter : **Schmidt-Bogatzky, Jürgen, Dr. Ing.
Schlossmühlendamm 4
D-2100 Hamburg 90 (DE)**

## Beschreibung

Die Erfindung betrifft eine Gutübergabeeinrichtung zum Be- und Entladen von Großraumtransportmitteln wie Schiffen od. dgl., mit einem mit Gutbe- und Entladeeinrichtungen verbundenen gewendelten Senkrechtförderer, an dessen unterem Endabschnitt ein verschwenk- und ggf. teleskopierbarer Horizontalförderer angeordnet ist.

Durch die DE-B-1 290 875 ist bereits eine gattungsgemäße Gutübergabeeinrichtung bekannt geworden. Bei dieser Vorrichtung besteht der Senkrechtförderer aus zwei wendelförmigen Förderern, von denen der eine zu dem anderen durch wendelförmiges drehen vertikal verschiebbar ist und an seinem unteren Endabschnitt den Horizontalförderer aufweist. Bei dieser Vorrichtung besteht der Nachteil, daß im Übergabebereich zwischen den beiden wendelförmigen Förderern Überleitrollen angeordnet sein müssen, damit sowohl ein Be- wie auch Entladebetrieb möglich ist. Durch diese Übergaberollen können Erschütterungen des zu fördernden Gutes bewirkt werden, wobei zusätzlich die Gefahr besteht, daß durch die Erschütterungen die Förderrichtung des Gutes beeinflußt wird mit der Gefahr, daß ein Gutstau entstehen kann.

Nach der DE-A-2 833 449 ist eine Vorrichtung bekannt, bei der zwischen dem senkrechten Schneckenförderer und dem Horizontalförderer ein Zwischenförderer angeordnet ist. Diese Vorrichtung erfordert auch einen besonderen Rollenförderer mit mindestens einer Übergaberolle zwischen dem Zwischenförderer und dem Horizontalförderer. Diese Vorrichtung weist daher die gleichen Nachteile wie die oben erwähnte Vorrichtung auf.

Die Aufgabe der Erfindung besteht darin, eine gattungsgemäße Vorrichtung so auszubilden, daß ohne besondere Überleitrollen eine Umstellung der Gutübergabeeinrichtung von Beladebetrieb auf Entladebetrieb und umgekehrt möglich ist.

Erfindungsgemäß erfolgt die Lösung der Aufgabe dadurch, daß der Horizontalförderer gutübergabeseitig mit einer als Wendelfördererssegment ausgebildeten Gutübergabewendel in Wirkverbindung steht, die synchron mit dem Horizontalförderer oberhalb oder unterhalb des unteren Wendelfördererssegments beim Schwenken des Horizontalförderers verschiebbar ist und daß nach Distanzierung der Gutübergabewendel von dem unteren Endabschnitt des unteren Wendelfördererssegments durch gleichzeitiges Drehen und Absenken der Gutübergabewendel entsprechend der Kurvenwendel des Senkrechtförderers und anschließende Horizontaldrehung der Gutübergabewendel um die Längsachse des Senkrechtförderers die Gutübergabewendel mittels einer Umsteuereinrichtung relativ zum unteren Wendelfördererssegment anhebbar oder absenkbar ist.

Weitere Merkmale der Erfindung werden in den Unteransprüchen beschrieben und im folgenden am Beispiel der in den Zeichnungen dargestellten Gutübergabeeinrichtung näher erläutert. Es zeigt

Figur 1 eine Be- und Entladevorrichtung mit einem Senkrechtförderer und einer erfindungsgemäßen Gutübergabeeinrichtung in einer schematischen Seitenansicht,

Figur 2 den Senkrechtförderer nach Fig. 1 in einer vergrößerten Ansicht im Ausschnitt in einer Seitenansicht,

Figur 3 die Gutübergabeeinrichtung des Senkrechtförderers nach Fig. 12 als Einzelheit in einer vergrößerten Seitenansicht,

Figur 4 die Halteeinrichtung für die Gutübergabeeinrichtung nach Fig. 3 in einer Seitenansicht im teilweisen Schnitt,

Figur 5 das Führungsstück der Gutübergabeeinrichtung in der Draufsicht,

Figur 6 eine schematische Darstellung des oberen Wendelabschnitts der Gutübergabewendel in der Be- und Entladestellung.

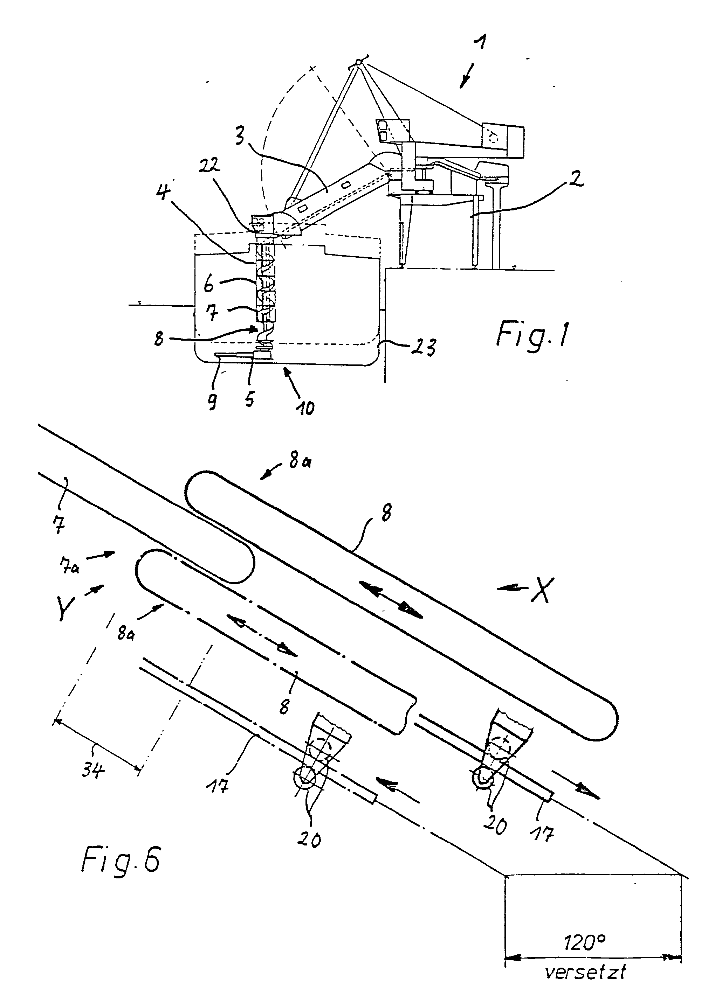

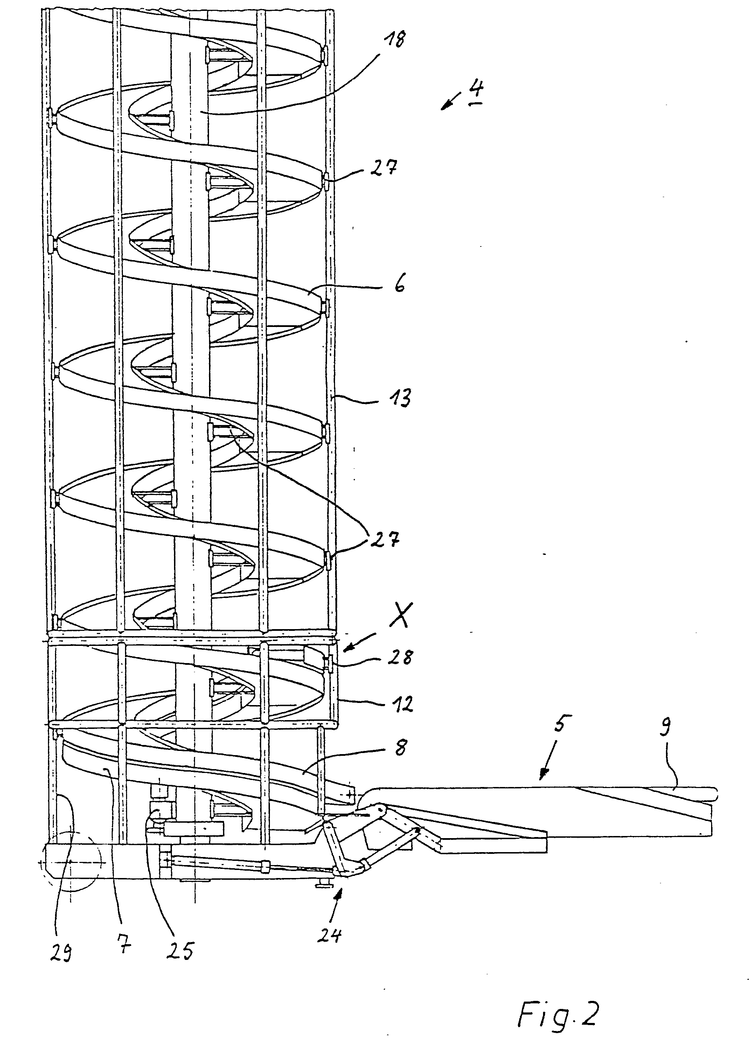

In Fig. 1 ist schematisch eine Be- und Entladevorrichtung 1 dargestellt, die zur Be- und Entladung eines Schiffes 23 dient. Die Be- und Entladevorrichtung 1 weist einen Portalwagen auf, der am Kai verfahrbar ist. An den Portalwagen 2 ist ein Ausleger mit Förderband angeordnet, an dessen freiem Endabschnitt eine Halteplattform 22 vorgesehen ist, an der ein Senkrechtförderer 4 befestigt ist. Der Senkrechtförderer 4 ragt in den Laderaum des Schiffes 23 und besteht aus verschiedenen Wendelfördererssegmenten 6 und einen unteren Wendelfördererssegment 7. Jedes der Wendelfördererssegmente 6 sowie das untere Wendelfördererssegment 7 weisen ein über einen Bereich von 360° gewendelten Förderbandabschnitt auf, der reversierbar motorisch antreibbar ist. Am unteren Endabschnitt des Senkrechtförderers 4 befindet sich eine Gutübergabeeinrichtung 10, die aus einer Gutübergabewendel 8 besteht, an deren unteren Gutübergabeabschnitt ein Horizontalförderer 5 angeordnet ist. Der Horizontalförderer 5 kann teleskopisch ausgebildet sein und einen vertikal verschwenkbaren Endförderer 9 aufweisen. Die Gutübergabewendel 8 ist mit einem aus Rahmenstangen 29 gebildeten Rahmen 12 verbunden. Dieser Rahmen 12 ist zu dem Rahmen 13 des Senkrechtförderers 4 räumlich veränderbar. Der Rahmen 13 besteht aus vertikalen Haltestangen 26, die den Senkrechtförderer 4 als Rammschutz umgeben. Die Wendelfördererssegmente 6 des Senkrechtförderers 4 sind mittels Befestigungsgliedern 27 mit dem Halterohr 18 verbunden, das koaxial zur Längsachse 35 des Senkrechtförderers 4 angeordnet ist (Fig. 2).

Im unteren Bereich sind die Rahmenstangen 29 des Rahmens 12 mit einer Grundplatte 14 verbunden. An der Grundplatte 14 ist der Horizontalförderer 5 angelenkt, der mittels einer z. B. hydraulischen Stelleinrichtung 24 betätigbar ist.

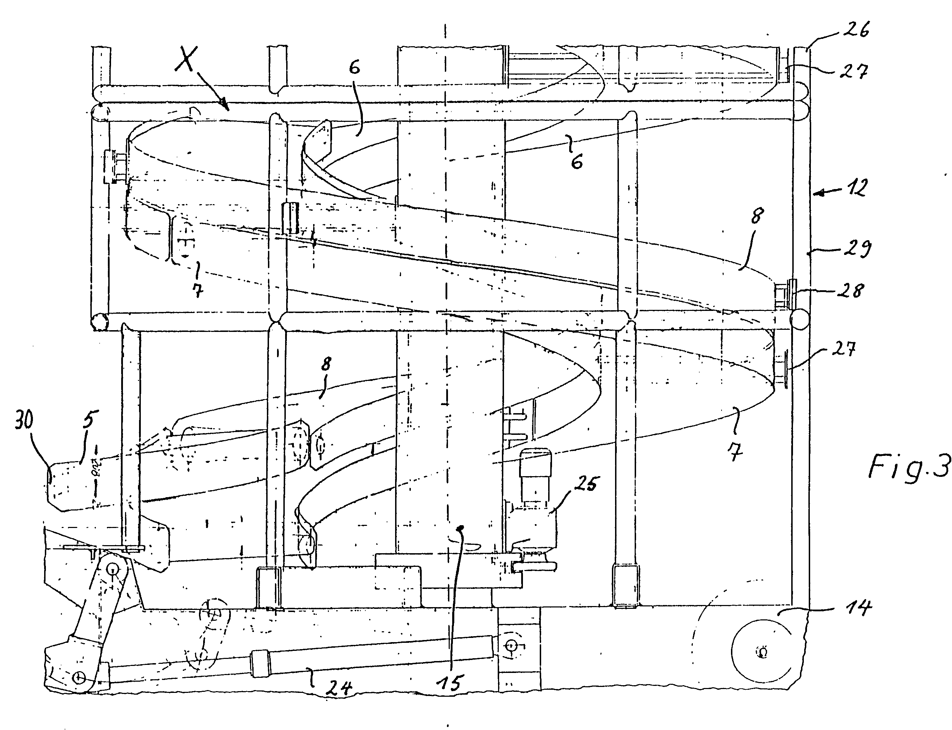

Die Gutübergabewendel 8 ist mittels Befestigungsgliedern 28 mit Rahmenstangen 29 des Rahmens 12 verbunden (Fig. 3). An dem Halterohr 18 ist ferner ein Antriebsmotor 25 vorgesehen, der zum Verschwenken der Gutübergabewendel 8 dient. In Fig. 3 ist auch angedeutet, daß der Horizontalförderer 5 bei Betätigung des hydraulischen Stellantriebs 24 um ein Gelenk 30 vertikal verschieblich ist.

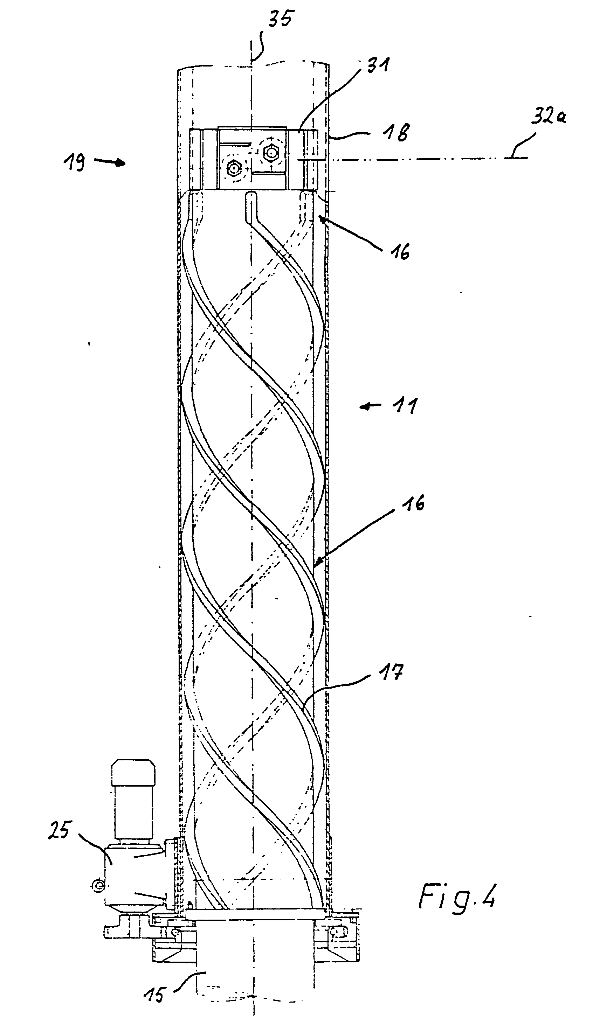

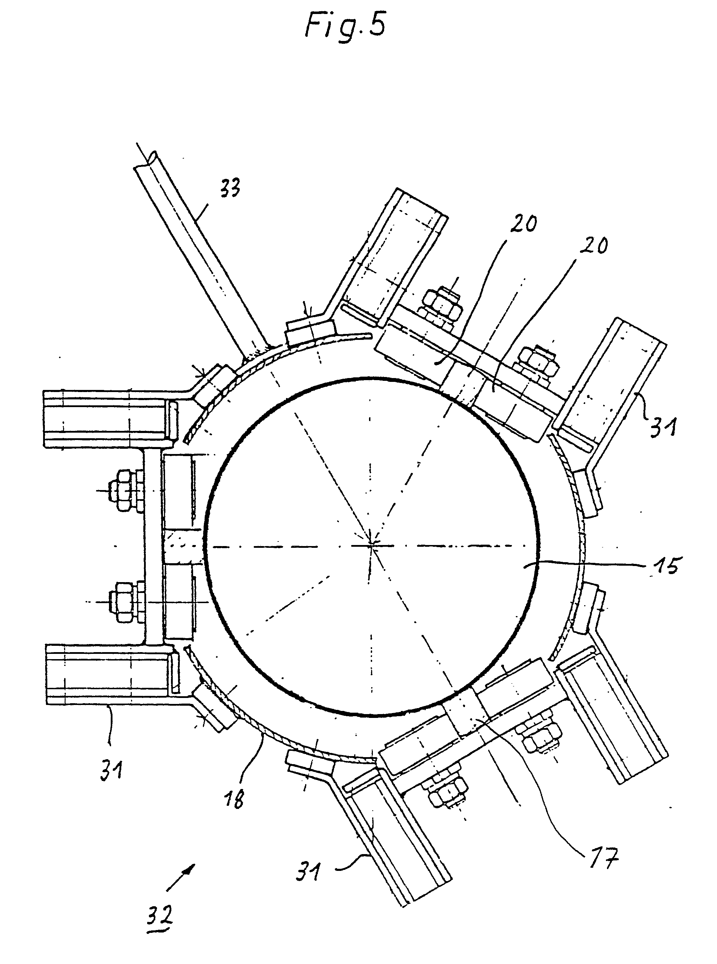

Die Grundplatte ist mittig mit einer Hubsäule 15 verbunden, die über die Höhe der Gutübergabewendel 8 sich erstreckende Führungsschienen 17 aufweist, die innerhalb des Halterohrs 18 befindlich sind. Die Führungsschienen 17 sind schraubenförmig gewendelt und zueinander gleichsinnig versetzt angeordnet. In der Ebene 32a des oberen Endabschnitts des unteren Wendelfördererersegments 7 ist in dem Halterohr 18 ein Führungsstück 32 befestigt (Fig. 4 und 5). Das Führungsstück 32 besteht aus drei um einen Winkel von 120° zueinander versetzten Rollenhaltern 31. Jeder Rollenhalter 31 weist zwei Führungsrollen 20 auf, die in der Höhe zueinander derart versetzt angeordnet sind, daß sie beim Einführen der Führungsschienen 17 in das Führungsstück 32 an den Führungsschienen 17 anliegen. Die Rollenhalter 31 sind mit dem Halterohr 18 verbunden. Die Führungsschienen 17 sind zueinander um ein ganzzahliges Bruchteil von 360° versetzt. Die Betätigung der Hubsäule 15 erfolgt mittels eines nicht näher dargestellten Stellantriebs, der als hydraulischer Hubzylinder ausgebildet und auf der Halteplattform 22 angeordnet sein kann.

Zum Be- und Entladen mittels der Be- und Endladevorrichtung ist es bei einer Umkehr vom Beladen zum Entladen oder umgekehrt erforderlich, die Gutübergabewendel 8 so in bezug auf das untere Wendelfördererersegment 7 anzuordnen, daß kein Güterstau auftreten kann. Hierzu wird bei einer zu erfolgenden Umsteuerung des Ladevorganges die Gutübergabewendel 8 so weit aus den Bereich des unteren Wendelfördererersegmentes 7 herausgedreht, daß sich der obere Endabschnitt 8a der Gutübergabewendel 8 unterhalb des unteren Endabschnitts 7a des unteren Wendelfördererersegmentes 7 befindet. Mittels des Antriebsmotors 25 oder aber auch ggf. von Hand kann die Gutübergabeeinrichtung 10 mit der Gutübergabewendel 8 dann um 120° geschwenkt werden. Besondere Anschläge vermindern die Gefahr einer Unterschreitung oder Überschreitung dieser geometrischen Werte. Durch den Versatz um 120° ist gewährleistet, daß beim Wiederhochdrehen des Rahmens 12 mit der Gutübergabewendel 8, diese sich in vorbestimmter Weise oberhalb oder unterhalb des unteren Wendelfördererersegments 7 befindet (Fig. 6).

In Fig. 6 ist schematisch die Zuordnung des unteren Endabschnitts 7a des unteren Wendelfördererersegments zum oberen Endabschnitt 8a der Gutübergabewendel 8 dargestellt. In der Entladestellung « X » befindet sich der obere Endabschnitt 8a der Gutübergabewendel 8 oberhalb des unteren Endabschnitts 7a des Wendelfördererersegments 7. Beim Beladen dagegen ist der Endabschnitt 8a der Gutübergabewendel unterhalb des Wendelförderers 8 angeordnet « Y ».

Die Gutübergabeeinrichtung 19 ermöglicht eine einfach vorzunehmende Umstellung einer gattungsgemäßen Be- und Entladevorrichtung von einer Entladestellung « X » in eine Beladestellung « Y » und umgekehrt. Da die Bewegungsvorgänge der Gutübergabeeinrichtung entweder vom Antriebsmotor 25 oder aber von einem hydraulischen Stellantrieb von beispielsweise der Halteplattform 22 durchgeführt werden kann, entfällt das Erfordernis manuelle Eingriffe im Bereich der Gutübergabeeinrichtung 10 bei Umsteuerung des Ladevorgangs vorzunehmen.

**Patentansprüche**

1. Gutübergabeeinrichtung zum Be- und Entladen von Großraumtransportmitteln wie Schiffen od. dgl., mit einem mit Gutbe- und entladeeinrichtungen verbundenen gewendelten Senkrechtförderer (4), an dessen unterem Endabschnitt ein verschwenk- und ggf. teleskopierbarer Horizontalförderer (5) angeordnet ist, dadurch gekennzeichnet, daß der Horizontalförderer (5) gutübergabeseitig mit einer als Wendelfördererersegment ausgebildeten Gutübergabewendel (8) in Wirkverbindung steht, die synchron mit dem Horizontalförderer (5) oberhalb oder unterhalb des unteren Wendelfördererersegments (7) beim Schwenken des Horizontalförderers (5) verschiebbar ist und daß nach Distanzierung der Gutübergabewendel (8) von dem unteren Endabschnitt des unteren Wendelfördererersegment (7) durch gleichzeitiges Drehen und Absenken der Gutübergabewendel (8) entsprechend der Kurvenwendel des Senkrechtförderers (4) und anschließende Horizontaldrehung der Gutübergabewendel (8) um die Längsachse des Senkrechtförderers (4) die Gutübergabewendel (8) mittels einer Umsteuereinrichtung (11) relativ zum unteren Wendelfördererersegment (7) anhebbar oder absenkbar ist.

2. Gutübergabeeinrichtung nach Anspruch 1, dadurch gekennzeichnet, daß die Gutübergabewendel (8) in einem zum Senkrechtförderer (4) verschieblichen Rahmen (12) gelagert ist, der auf einer Grundplatte (14) abgestützt ist, an der der Horizontalförderer (5) befestigt ist und die horizontal drehbar und vertikal verschieblich ist.

3. Gutübergabeeinrichtung nach Anspruch 1 und 2, dadurch gekennzeichnet, daß die Grundplatte (14) mittels eines Antriebsmotors (25) horizontal drehbar ist.

4. Gutübergabeeinrichtung nach Anspruch 1 und 2, dadurch gekennzeichnet, daß die Grundplatte (14) mittig mit einer mittels eines Stellmotors vertikal verschieblichen Hubsäule (15) verbunden ist, an der vertikal wendelförmige Führungsglieder (16) ausgebildet sind, die mit einem Führungsstück (32) in Wirkeingriff bringbar sind, das an einem die Hubsäule (15) umgebenden und den Senkrechtförderer (4) tragenden Halterohr (18) angeordnet ist.

5. Gutübergabeeinrichtung nach Anspruch 4, dadurch gekennzeichnet, daß die Führungsglieder (16) als schraubenförmig gewendelte zueinander gleichsinnig versetzt angeordnete Führungsschienen ausgebildet sind.

6. Gutübergabeeinrichtung nach Anspruch 4, dadurch gekennzeichnet, daß der Stellmotor als hydraulischer Hubzylinder od. dgl. ausgebildet ist, mittels dem die Hubsäule (15) entlang der Bahnwendel der Führungsschienen (17) drehbar und vertikal verschieblich ist.

7. Gutübergabeeinrichtung nach Anspruch 1 bis 6, dadurch gekennzeichnet, daß die Führungsschienen (17) an der Hubsäule (15) in einer der Höhe der Gutübergabewendel (8) entsprechenden Länge angeordnet und mit dem in der horizontalen Ebene des oberen Endabschnitts des unteren Wendelförderersegment (7) angeordneten Führungsstück (32) in Eingriff bringbar sind.

8. Gutübergabeeinrichtung nach Anspruch 7, dadurch gekennzeichnet, daß das Führungsstück (32) aus versetzt zueinander am Halterohr (18) befestigten Rollenhalter (31) besteht, an denen mit den Führungsschienen (17) in Eingriff bringbare Führungsrollen (20) drehbar gelagert sind.

9. Gutübergabeeinrichtung nach Anspruch 1 bis 7, dadurch gekennzeichnet, daß die unterhalb des unteren Endabschnitts (7a) des unteren Wendelförderersegments (7) befindliche Gutübergabewendel (8) mittels des Antriebsmotors (25) od. dgl. horizontal um einen Winkel verschwenkbar ist, der dem der Anzahl der Führungsschienen (17) entsprechenden ganzzahligen Bruchteil von 360° entspricht.

## Claims

1. Goods transfer means for loading and unloading large area transportation means such as ships or the like, by means of a vertically spirally curved conveyor (4) connected to the goods loading and unloading means a pivotable and optionally telescopable horizontal conveyor is arranged on the lower end portion thereof, characterized in that on the goods transfer side the horizontal conveyor (5) is in operative connection with a goods transfer spiral (8) constructed as a spiral conveyor segment (6), said goods transfer spiral (8) being synchronously movable with the horizontal conveyor (5) above or below the lower spiral conveyor segment (7) during the pivoting of the horizontal conveyor (5) and that the goods transfer spiral (8) can be raised or lowered by means of a reversing device (11) relative to the lower spiral conveyor segment (6) after the goods transfer spiral (8) is spaced from the lower end portion of the lower spiral conveyor segment (7) by simultaneous revolving and lowering the goods transfer spiral (8) according to the spiral of the vertical conveyor (4) and following horizontally rotation of the goods transfer spiral (8) about the longitudinal axis of the vertical conveyor (4).

2. Goods transfer means according to claim 1, characterized in that the goods transfer spiral (8) is mounted in a frame (12) displaceable with respect to the vertical conveyor (4) and which is supported on a base plate (14), to which is fixed the horizontal conveyor (5) and which is horizontally rotatable and vertically displaceable.

3. Goods transfer means according to claims 1 and 2, characterized in that the base plate (14) is horizontally rotatable by means of a drive motor (25).

4. Goods transfer means according to claims 1 and 2, characterized in that the base plate (14) is centrally connected to a lifting column (15) vertically displaceable by means of a servo-motor and on which are constructed vertically helical guide members (16), which can be brought into operative engagement with a guide piece (32), positioned on a holding tube (18) carrying the vertical conveyor (4) and surrounding the lifting column (18).

5. Goods transfer means according to claim 4, characterized in that the guide members (16) are constructed as helically coiled guide rails displaced relative to one another in the same direction.

6. Goods transfer means according to claim 4, characterized in that the servo-motor is constructed as a hydraulic lifting cylinder or the like by means of which the lifting column (15) is rotatably and vertically displaceable along the path coil of the guide rails (17).

7. Goods transfer means according to claims 1 to 6, characterized in that the guide rails (17) are provided on the lifting column (15) in a length corresponding to the height of the goods transfer spiral (8) and can be engaged with the guide piece (32) arranged in the horizontal plane of the upper end portion of the lower spiral conveyor segment (7).

8. Goods transfer means according to claim 7, characterized in that the guide piece (32) comprises roll holders (31), which are displaced from one another and fixed to the holding tube (18) and on which are rotatably mounted guide rolls (20) which can be engaged with the guide rails (17).

9. Goods transfer means according to claims 1 to 7, characterized in that the goods transfer spiral (8) located below the lower end portion (7a) of the lower spiral conveyor segment (7) is horizontally pivotable by means of the drive motor (25) or the like about an angle corresponding to the integral fraction of 360° which corresponds to the number of guide rails (17).

## Revendications

1. Installation de transfert de matériaux pour charger et décharger des moyens de transport de grand volume tels que des bateaux ou autres analogues, comportant un transporteur vertical (4) en spirale relié à des dispositifs de chargement et déchargement de matériaux, et sur le tronçon d'extrémité inférieur duquel est monté un transporteur horizontal (5) pouvant pivoter et éventuellement d'une façon télescopique, installation caractérisée en ce que le transporteur horizontal (5) est en liaison active, du côté du transfert de matériaux, avec une hélice (8) de transfert de matériaux constituée sous la forme de segment de transporteur hélicoïdal et qui peut se déplacer en synchronisme avec le transporteur horizontal (5) au-dessus ou au-dessous du segment inférieur (7) du transporteur hélicoïdal lors du pivotement du transporteur horizontal (5), et en ce qu'après écartement de l'hélice (8) de transfert de matériaux du tronçon d'extrémité inférieur du segment inférieur (7) du transporteur hélicoïdal par rotation et abaissement simultanés de l'hélice (8) en correspondance avec la spirale curviligne du transporteur vertical (4), et rotation horizontale, à la suite, de l'hélice (8) sur l'axe longitudinal du transporteur vertical (4), l'hélice (8) de transfert de matériaux peut être soulevée ou abaissée, au moyen d'un dispositif (11) de changement de direction, par rapport au segment inférieur (7) du transporteur hélicoïdal.

2. Installation de transfert de matériaux selon la revendication 1, caractérisée en ce que l'hélice (8) de transfert de matériaux est montée dans un cadre (12) mobile par rapport au transporteur vertical (4), et qui s'appuie sur une plaque de base (14), à laquelle est fixé le transporteur horizontal (5), et qui peut tourner horizontalement et se déplacer verticalement.

3. Installation de transfert de matériaux selon les revendications 1 et 2, caractérisée en ce que la plaque de base (14) peut tourner horizontalement au moyen d'un moteur d'entraînement (25).

4. Installation de transfert de matériaux selon les revendications 1 et 2, caractérisée en ce que la plaque de base (14) est reliée au centre à une colonne de levage (15) déplaçable verticalement au moyen d'un servo-moteur, et sur laquelle sont constitués des organes de guidage (16), verticalement de forme hélicoïdale, qui peuvent être amenés en prise active avec une pièce de guidage (32), qui est montée sur un tube de maintien (18) entourant la colonne de levage (15) et portant le transporteur vertical (4).

5. Installation de transfert de matériaux selon la revendication 4, caractérisée en ce que les organes de guidage (16) sont constitués sous la forme de rails-guides disposés décalés de même sens les uns des autres en allant en spirale.

6. Installation de transfert de matériaux selon la revendication 4, caractérisée en ce que le servo-moteur est constitué sous la forme de cylindre de levage hydraulique ou autre analogue, au moyen duquel la colonne de levage (15) peut tourner et se déplacer verticalement le long de l'hélice de trajectoire des rails-guides (17).

7. Installation de transfert de matériaux selon les revendications 1 à 6, caractérisée en ce que les rails-guides (17) sont montés sur la colonne de levage (15) sur une longueur correspondant à la hauteur de l'hélice (8) de transfert de matériaux, et peuvent être amenés en prise avec la pièce de guidage (32) disposée dans le plan horizontal du tronçon d'extrémité supérieur du segment inférieur (7) du transporteur hélicoïdal.

8. Installation de transfert de matériaux selon la revendication 7, caractérisée en ce que la pièce de guidage (32) est constituée par des appuis à rouleaux (31) fixés au tube de maintien (18) en étant décalés les uns des autres, et sur lesquels sont montés en pouvant tourner des galets de guidage (20) pouvant être amenés en prise avec les rails-guides (17).

9. Installation de transfert de matériaux selon les revendications 1 à 7, caractérisée en ce que l'hélice (8) de transfert de matériaux qui se trouve au-dessous du tronçon d'extrémité inférieur (7a) du segment inférieur (7) du transporteur hélicoïdal peut pivoter horizontalement au moyen du moteur d'entraînement (25) ou autre analogue, d'un angle qui correspond à la fraction en nombre entier de 360° correspondant au nombre des rails-guides (17).

Fig.1

Fig.6

120°
versetzt

0 075 645

Fig.2

Fig.3

Fig.4

# Fig.5